# EUROPEAN PATENT APPLICATION

(11) **EP 4 155 489 A1**
(43) Date of publication of application: **29.03.2023**
(21) Application number: 22194464.8
(22) Date of filing: 07.09.2022
(51) Int. Cl.: E05B 81/76

(54) **DETECTION DEVICE AND DETECTION SYSTEM FOR ACTIVATING AT LEAST ON FUNCTION OF AN APPARATUS, AND APPARATUS COMPRISING THE DETECTION SYSTEM**

(30) Priority: 23.09.2021 EP 21198616
(71) Applicant: U-Shin Italia S.p.A., 10044 Pianezza (IT)
(72) Inventor: GUERIN, Anthony, 10044 PIANEZZA (IT); PEYNOT, Thomas, 10044 PIANEZZA (IT); CITRON, Frédéric, 10044 PIANEZZA (IT); FIMOGNARI, Dario, 10044 PIANEZZA (IT); FRATTINI, Massimo, 10044 PIANEZZA (IT); GRAMAGLIA, Alberto, 10044 PIANEZZA (IT); KRAUSS, Dietmar, 85253 ERDWEG (DE)
(74) Representative: Germain Maureau

(57) **Abstract**

The disclosure concerns a detection device (15) for activating at least one function of an apparatus, for example for activating an electric lock of a vehicle's door, upon the detection of a force applied to an activation part (9) of the apparatus, the apparatus further comprising a fixed part (7), the activation part (9) being fixedly attached to the fixed part (7), the detection device (15) comprising:
- a blade (19) and comprising a first bearing part (23) configured to bear against the activation part (9) and a second bearing part (25, 25') configured to bear against the fixed part (7),
- at least one sensor (21, 21') arranged on the blade (19) between the first bearing part (23) and the second bearing part (25), and configured to measure a deformation of the blade (19) when a force is applied on the activation part (9) and collect deformation signal to be transmitted to a controller.

## Description

### TECHNICAL FIELD

The present disclosure concerns a detection device for activating at least one function of an apparatus, for example for activating an electric lock of a vehicle's door.

### BACKGROUND

It is known from the state of the art that touch and/or pressure-sensitive sensors and proximity sensors can be provided for the opening of electronic door lock, for example of a vehicle.Such sensors can be used, for example, on a door handle in order to detect contact with the door handle. Most of the pressure sensors are accessible from the outside of the handle in order to achieve a successful measurement. In response to a detection by the corresponding sensor, a vehicle function can be activated, for example activation of an electronic lock. Thus, for example, the door can be opened by touching the door handle of a door. However, this creates installation difficulties, for example, it is necessary to provide a sealing against moisture. There is therefore a need for a more reliable and/or more accurate and/or simpler option for activating vehicle functions.

### SUMMARY

To this end, the present disclosure concerns a detection device for activating at least one function of an apparatus, for example for activating an electric lock of a vehicle's door, upon the detection of a force applied to an activation part of the apparatus, the apparatus further comprising a fixed part, the activation part being fixedly attached to the fixed part, the detection device comprising:
- a blade comprising a first bearing part configured to bear against the activation part and a second bearing part configured to bear against the fixed part,
- at least one sensor arranged on the blade between the first bearing part and the second bearing part, and configured to measure a deformation of the blade when a force is applied on the activation part and collect deformation signal to be transmitted to a controller.

It is to be understood that the activation is configured to be activated by a user. In other words, the user may apply a force to the activation part when they intend to activate the function of the apparatus. Therefore, although the user may not be able to sense it, the activation part is movable relatively to the fixed part such that the blade is deformed.

The detection device according to the present disclosure is more accurate and reliable. Indeed, the blade being arranged between the fixed part and the activation part, the blade is more sensitive to deformation induced by the force applied to the activation part by the user.

Moreover, the use of a blade allows measuring a deformation between the fixed part and the activation part more directly.

The detection device according to the present disclosure also improve the comfort of the user. The mounting of the detection device on the apparatus is easier and therefore cost effective.

Additionally, the use of a blade allows replacing easily the detection device if needed.

It is to be understood that the signal is representative of a deformation data.

It is to be understood that the blade is sandwiched between the fixed part and the activation part.

When a user applies a force on the activation part, it is to be understood that the first bearing part and the second bearing part are configured to be stressed in opposite directions.

In other words, when a user applies a force on the activation part, the force transmitted to the first bearing part may be in the same direction as the force applied by the user. Since, the second bearing part bears against the fixed part, the movement of the blade induced by the force transmitted to the first bearing part is hindered by the fixed part at the second bearing part of the blade. Therefore, the force transmitted to the second bearing part by the fixed part is opposed to the force transmitted to the first bearing part by the activation part.

The apparatus may be mounted on an assembly. For example, the assembly is a door of a vehicle. The fixed part is to be understood as the part of the apparatus configured to be integrally mounted on the assembly.

The function may be a function of an electric lock, such as an opening/closing or a locking/unlocking function.

Furthermore, a vibration pattern can be used, for example, to unlock or lock the electric lock. This is done, for example, by a user placing his smartphone on the handle, in particular on the activation part and the smartphone emitting a vibration pattern that has previously been communicated to the controller. The controller evaluates the vibration pattern and opens or closes the lock. Preferably, different vibration patterns can be used for opening and closing the lock.

Preferably, an app on the smartphone emits a vibration pattern, using an integrated resonant body of the smartphone. This pattern is emitted upon physical contact of the smartphone with the door handle.

The sensor detects the vibration pattern and the controller evaluates the pattern and initiates vehicle doors unlock if the pattern is known to the system.

In particular, it is advantageous if the AES encryption scheme is used instead of RSA because symmetric encryption requires less data on the acoustic channel. Additionally, other data can be transmitted through the vibration pattern, preferably dynamic data such as a counter, timestamp and validity period, to avoid relay attacks. Furthermore, the keys used for encryption can be stored in a secure area in the smartphone or in another device.

Advantageously, the vibration pattern uses a frequency between 50 Hz and 1000 Hz, preferably between 100 Hz and 500 Hz, more preferably between 130 Hz and 250 Hz. A digital filter (FFT - fast Fourier transform) may be implemented in the controller, with a center frequency or resonant circuit for typical smartphone vibration frequencies between 50 Hz and 1000 Hz, preferably between 100 Hz and 500 Hz, more preferably between 130 Hz and 250 Hz. This results in a robust vibration detection and noise can be filtered out.

This can, for example, eliminate the need for an additional sensor for wireless authentication of the user.

Furthermore, a special device can be used instead of a smartphone, such as a smartwatch or a key with integrated vibrator, etc., which generates the vibration pattern, instead of a smartphone.

In addition, a visual feedback (LED), for example by activating the key illumination and/or a handle illumination when sending a vibration pattern, can indicate to a user that an authentication is being performed.

Furthermore, the vibration pattern described above can be used only as a trigger to activate a wireless communication between the vehicle and the smartphone, so that the actual authentication is performed via a wireless connection between the vehicle and the smartphone.

In this use case, only a simple vibration sequence is needed, since the security mechanism can be handled later via the wireless connection (Bluetooth, WIFI, etc.).

Also possible is a knocking sequence instead of using a vibration pattern, whereby the knocking sequence is performed with the user's hand, thereby eliminating the need of a smartphone.

The first bearing part may be secured to the activation part and/or the second bearing part may be secured to the fixed part.

It is to be understood that the first bearing part may be firmly secured to the activation part and/or the second bearing part may be firmly secured to the fixed part. For example, the first bearing part may be attached to the activation part via a screw. For example, the second bearing part may be secured to the fixed part via a screw.

The first bearing part may be secured to the activation part by at least one overmolded securing portion or the second bearing part may be secured to the fixed part by at least one overmolded securing portion.

It is to be understood that the blade may be positioned in the mold for manufacturing the activation part or the fixed part, when the fixed part or the activation part is manufactured.

In other words, the overmolded securing portion may be configured to secure the blade to the activation part or the overmolded securing portion may be configured to secure the blade to the fixed part.

It is to be understood that the overmolded securing portion is formed with the activation part or with the fixed part.

The sensor may be positioned on one or the other face of the blade.

For example, the sensor may be positioned on a face of the blade configured to bear against the overmolded securing portion. This face of the blade may be facing the outside.

For example, the sensor may be positioned on the face of the blade opposite to the face configured to bear against the overmolded securing portion. This face of the blade may be facing the inside of the fixed part or the activation part, for example, an internal cavity of the fixed part or the activation part.

The overmolded securing portion may protrudes from an external envelope of the fixed part or the activation part.

The blade may be made of metal material. For example, the blade may be made of steel.

The stiffness and elasticity of the blade is configured to be adapted such that the sensor is able to accurately measure the deformation of the blade.

The width of a portion of the blade where the sensor is arranged may be between 0,5 and 1,5 mm.

The width of a portion of the blade where the sensor is arranged may be between 0,6 and 1 mm.

The width of a portion of the blade where the sensor is arranged may be substantially 0,8 mm.

The sensor may be sticked on the blade. The mounting of the sensor on the blade is therefore simple and do not incur important costs.

The sensor may be a strain gage sensor.

The sensor may comprise one or several resistance(s).

The sensor may be a full-bridge strain gage.

The sensor may be a half-bridge strain gage.

The detection device may comprise a housing.

The housing may be configured to limit the deformation of the blade to a predetermined maximal value.

The risk of the blade being plastically deformed is therefore limited. In addition, the sensor is protected by the housing.

The housing may be configured to protect the sensor.

The housing may be positioned over the face of the blade on which the sensor is arranged.

The housing may be made of plastic material.

The sensor may be sandwiched between the blade and the housing.

The predetermined maximal value may correspond to a displacement comprised between 0,05 mm and 0,15 mm.

The predetermined maximal value may correspond to a displacement comprised between 0,08 mm and 0,13 mm.

The predetermined maximal value may correspond to a displacement substantially of 0,105 mm.

The first bearing part may comprise a protruding portion configured to transmit the force applied to the activation part to the portion of the blade where the sensor is arranged.

The protruding portion may be in abutment against the activation part.

The blade may comprise a third bearing part configured to bear against the fixed part, and a second sensor being arranged between the first bearing part and the third bearing part, the sensor being arranged between the first bearing part and the second bearing part being called the first sensor.

Therefore, the accuracy of the measurement of the deformation of the blade is improved.

It is to be understood that the second sensor is configured to measure a deformation of the blade when a force is applied on the activation part and collect deformation signal to be transmitted to a controller.

The first sensor and the second sensor may each be half-bridge strain gage, whereby the two half-bridge strain gages are connected together to form a full-bridge strain gage.

The blade may comprise positioning elements configured to help positioning the blade on the activation part and/or the fixed part during a mounting phase.

The present disclosure also concerns a detection system for activating at least one function of an apparatus, for example for activating an electric lock of a vehicle's door, upon the detection of a force applied to an activation part of the apparatus, the apparatus further comprising a fixed part, the activation part being fixedly attached to the fixed part, the detection system comprising :
- at least one detection device according to any one of the above mentioned features;
- a controller configured to receive the deformation signal transmitted by the sensor of the at least one detection device and to activate at least one function of an apparatus when the deformation signal corresponds to predetermined criteria.

The predetermined criteria may correspond to a predetermined range of the numeral values of the signal and/or a predetermined range of the duration of a modification of the signal and/or a predetermined range of the speed of a modification of the signal.

The modification of the signal is to be understood as a rise or a decrease of the value of the signal relatively to a rest value of the signal, the rest value corresponding to the absence of deformation of the blade.

The limit values of the range of the signal value and/or the limit values of the duration range of a modification of the signal and/or the limit values of the speed range of a modification of the signal may be chosen in accordance with the aging of the detection device and/or the outside temperature.

These predetermined criteria are chosen such that the function of the apparatus is not activated by modifications of the signal that may be due to the aging of the detection device and/or a variation of the outside temperature.

The present disclosure also concerns an apparatus, for example a handle of a vehicle's door, comprising:
- a fixed part,
- an activation part being fixedly attached to the fixed part,
- at least one detection system according to the above mentioned features.

The apparatus may be a handle of a door, for example a vehicle's door, or any other apparatus such as a motorized flap.

The activation part may be fixedly attached to the fixed part in a first mounting area and in a second mounting area, a first detection device being arranged in the first mounting area and a second detection device being arranged in the second mounting area.

Further advantages and advantageous features of the door handle apparatus are disclosed in the following description.

### BRIEF DESCRIPTION OF THE DRAWINGS

A possible embodiment of the door handle apparatus will now be described by way of non-limiting examples with reference to the appended figures:
Figure 1 is a view of the vehicle's door according to a first embodiment.
Figure 2 is a view of the door's handle according to the first embodiment.
Figure 3 is a rear view of the door's handle according to the first embodiment.
Figure 4 is a view of the activation part of the door's handle according to the first embodiment.
Figure 5 is a view of the detection device mounted on the door's handle of the first embodiment.
Figure 6 is a top view of the blade of the detection device.
Figure 7 is a side view of the blade of the detection device.
Figure 8 is a schematic view of the sensor.
Figure 9 is a view of the detection device comprising the blade and the first and second sensors.
Figures 10 and 11 represent the detection device wherein the housing is arranged on the blade.
Figure 12 is a bottom view of the detection device wherein the housing is arranged on the blade.
Figure 13 is a cross section view of the detection device wherein the housing is arranged on the blade.
Figure 14 is a view of a door's handle according to a second embodiment.
Figure 15 is cross section view of a detection device according to a second embodiment.
Figure 16 is a view of a door's handle according to a third embodiment.
Figure 17 is a cross section view of the detection device according to a first example of the third embodiment.
Figure 18 is a cross section view of the detection device according to a second example of the third embodiment.
Figure 19 is an explosion view of a door handle according to a fourth embodiment.
Figure 20 is a view of a door handle according to Fig. 19 in an assembled state.

### DETAILED DESCRIPTION OF EXAMPLE EMBODIMENTS OF THE INVENTION

In the following description, positioning terms such as front, back, left, right, etc., refer to an orthogonal basis comprising the following three directions: front-back, left-right and top-bottom. In this description, theses three directions correspond to the usual directions attached to the motor vehicle. However, in other embodiments of the invention, the directions front-back, left-right and top-bottom could be any set of arbitrary directions forming an orthogonal basis.

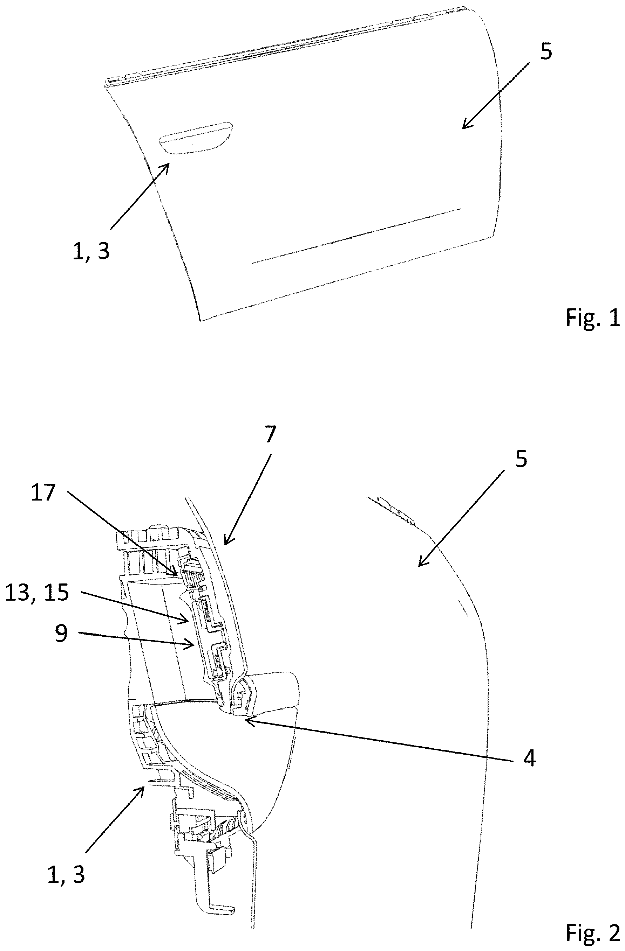

Figures 1 to 5 show an embodiment of an apparatus according to the present disclosure, wherein the apparatus is a handle 3 of a vehicle's door 5. In another embodiment, the apparatus may be a motorized flap for example. In this embodiment, the handle 3 is formed by a recess 4 in the outdoor wall of the door 5.

The handle 3 comprises a fixed part 7, corresponding to a bracket of the handle 3, integral with the door 5 of the vehicle, and an activation part 9, corresponding to a paddle of the handle 3. The activation part 9 is firmly attached to the fixed part 7, for example via laser welding. The activation part 9 may be in polycarbonate, for example in transparent polycarbonate. The activation may comprise a rubber part 10a, overmolded on a polycarbonate part 10b. The activation part 9 is configured to be activated by a user. The activation part 9 is movable relatively to the fixed part 7 at a scale wherein the movement of the activation part 9 is not detectable by the user. In other words, when pulling or pushing the activation part 9, the user feels that the activation part 9 is fixedly attached to the fixed part 7 even though the activation part 9 slightly moves.

The handle 3 further comprises one detection system 13 configured to activate at least one function of the handle 3 upon the detection of a force applied to an activation part 9 by the user. The function may be a function of an electric lock of the vehicle's door 5, such as an opening/closing or a locking/unlocking function. The detection system 13 comprises, in this embodiment, a first detection device 15, a second detection device 15' and a controller 17. The controller 17 may be positioned in the fixed part 7 or in the vehicle's door for example.

The first detection device 15 is described in the following description. This description applies to the second detection device 15'. The first detection device 15 is called herein after the detection device 15. The detection device 15 comprises a blade 19. The detection device 15 comprises a first sensor 21 and a second sensor 21' arranged on the blade 19, and configured to measure the deformation of the blade 19 when a force is applied to the activation part 9 and to transmit a deformation signal to the controller 17. Having two sensors 21, 21' improve the accuracy of the detection device.

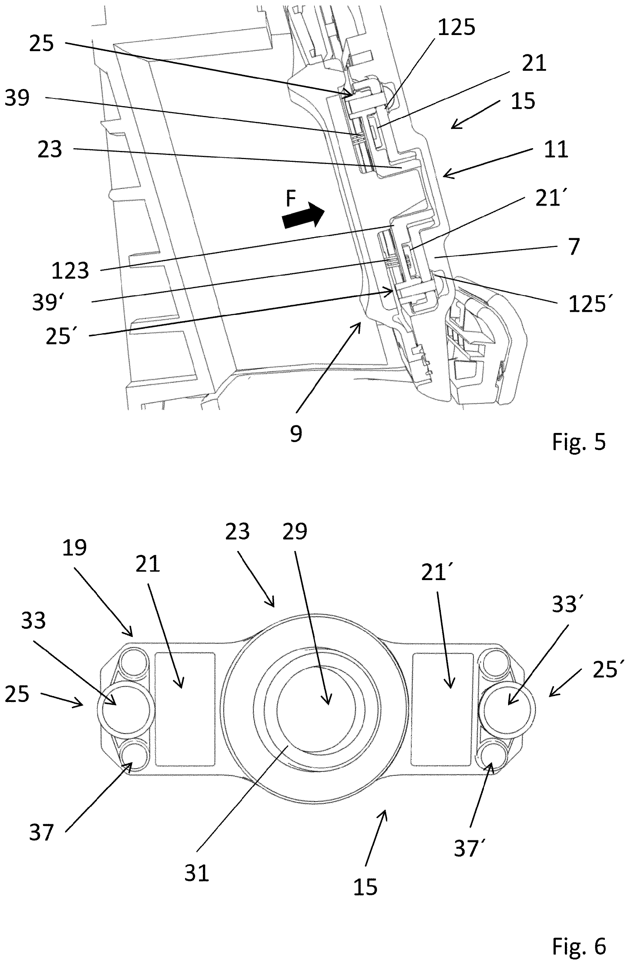

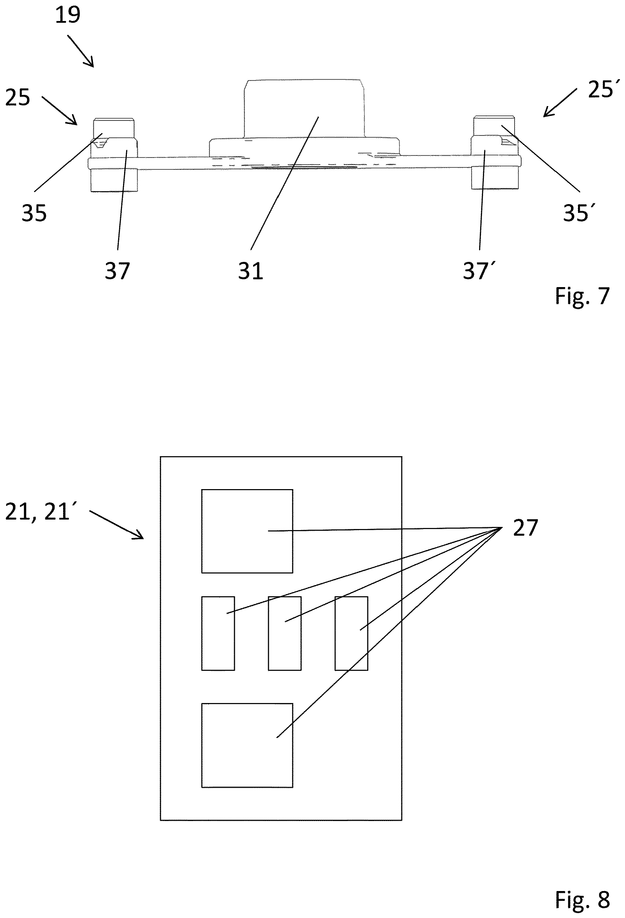

Figures 6 to 13 show an embodiment of the detection device. The blade 19 comprises a first bearing part 23 configured to bear against the activation part 9, a second bearing part 25 and a third bearing part 25', the second bearing part 25 an the third bearing part 25' being configured to bear against the fixed part 7.

The first sensor 21 is configured to be arranged on the blade 19 between the first bearing part 23 and the second bearing part 25. The second sensor 21' is configured to be arranged on the blade 19 between the first bearing part 23 and the third bearing part 25'.

The material and the thickness of the portions of the blade 19 where the first sensor 21 and the second sensor 21' are arranged are adapted such that the blade 19 deforms at these portions when the user applies a force on the activation part 9.

The force applied by the user may be between 10 and 60 N. The force applied by the user may be between 20 and 50 N.

For example, the thickness of the portion of the blade 19 where the first sensor 21 and the second sensor 21' are arranged is between 0,5 and 1 mm. For example, the thickness of the portion of the blade 19 where the first sensor 21 and the second sensor 21' are arranged is substantially of 0,8 mm.

The blade 19 may be of metal material such as steel.

In this embodiment, the first sensor 21 and the second sensor 21' are sticked on the blade 19. The first sensor 21 and the second sensor 21' may be fixed to the blade 19 by any other suitable means known by the skilled person.

In this embodiment, the first sensor 21 and the second sensor 21' can each be a half-bridge strain gage sensor, whereby the two half-bridge strain gage sensors are connected together to form a full-bridge strain gage sensor. The first sensor 21 and second sensor 21' comprise several resistances 27.

The first sensor 21 and the second sensor 21' may have a thickness comprised between 0,2 and 0,8 mm. The first sensor 21 and the second sensor 21' may have a thickness of 0,5 mm.

The first sensor 21 and the second sensor 21' may communicate with the controller 17 by wires 39, 39' respectively, or by any other suitable communication means known by the skilled person.

In this embodiment, the first bearing part 23 comprises a first protruding portion 31 and a first hole 29 formed in the first protruding portion 31.

The second bearing part 25 comprises a second protruding portion 35 and a second hole 33 formed in the second protruding portion 35. The third bearing part 25' comprises a third protruding portion 35' and a third hole 33' formed in the third protruding portion 35'.

The second bearing part 25 and the third bearing part 25' may also comprise positioning studs 37, 37' respectively configured to ease the positioning of the blade 19 during the mounting phase of the handle 3.

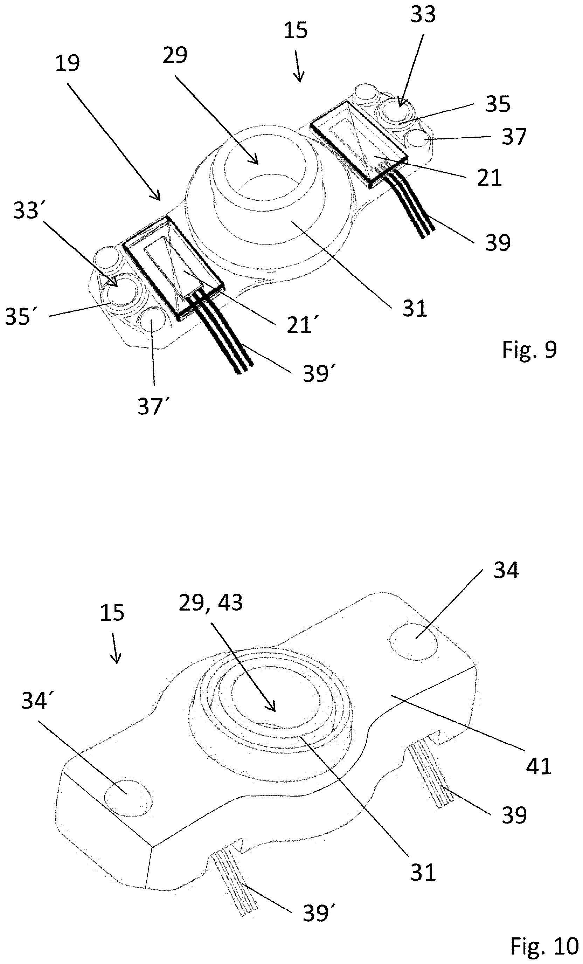

As shown on figures 9 to 13, the detection device 15 may comprise a housing 41. The housing 41 is configured to limit the deformation of the blade 19 to a predetermined maximal value. The predetermined maximal value may correspond to a displacement substantially of 0,105 mm (more or less 0,05 mm).

The first sensor 21 and the second sensor 21' are sandwiched between the blade 19 and the housing 41, and are therefore protected. The housing 41 may be made of plastic material.

The housing 41 covers the face of the blade 19 wherein the first sensor 21 and the second sensor 21' are arranged. The first sensor 21 and the second sensor 21' are arranged on the same face of the blade 19 in this embodiment. The housing 41 also covers the sides of the blade 19.

The housing 41 comprises a central hole 43 configured to be facing the first hole 29 of the first bearing part 23. The central hole 43 of the housing 41 and the first hole 29 of the first bearing part 23 of the blade 19 are concentric. In this embodiment, the central hole 43 of the housing 41 is engaged around the first protruding portion 31 of the first bearing part 23.

The housing 41 comprises a first side hole 45 configured to be facing the second hole 33. The housing 41 comprises a second side hole 45' configured to be facing the third hole 33'. The first side hole 45 and the second hole 33 are concentric in this embodiment. The second side hole 45' and the third hole 33' are concentric in this embodiment. The housing 41 may be secured to the blade via screws 34, 34'.

In this embodiment, the first bearing part 23 bears on a first bearing surface 123 of the activation part 9. The second bearing part 25 bears on a second bearing surface 125 of the fixed part 7. The third bearing part 25' bears on a third bearing surface 125' of the fixed part 7. The first bearing surface 123, the second bearing surface 125 and the third bearing surface125' are substantially parallel. The first bearing surface 123 and the second bearing surface 125 are disposed in opposite directions. The first bearing surface 123 and the third bearing surface 125' are disposed in opposite directions. The second bearing surface 125 and the third bearing surface 125' are disposed in the same direction.

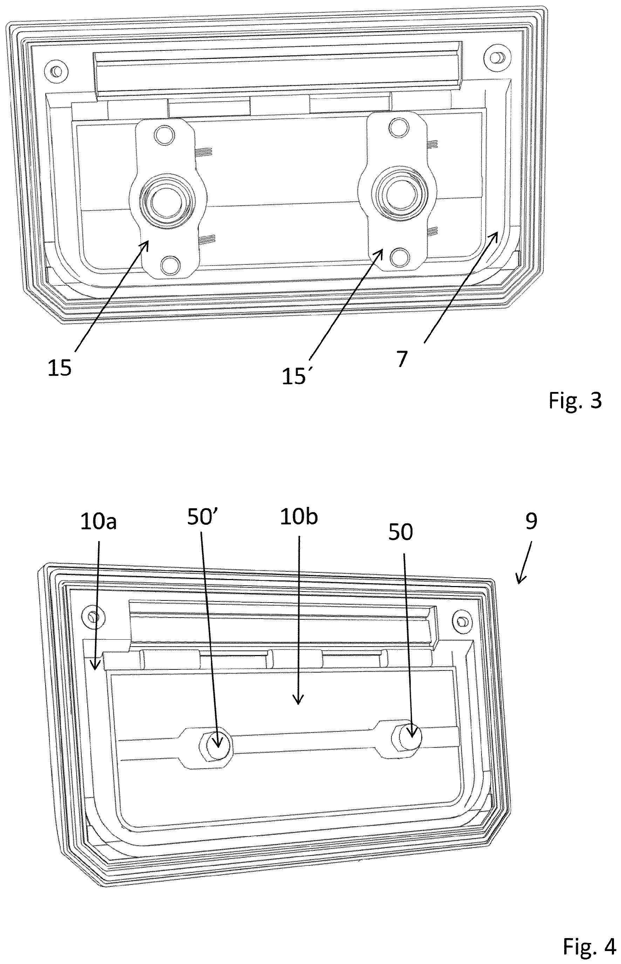

The blade 19 is therefore held between the first bearing surface 123 of the activation part 9 at the first bearing part 23 on one hand, and the second and third bearing surfaces 125, 125' of the fixed part 7, at the second and third bearing parts 25, 25' on the other hand. The activation part 9 may comprise positioning studs 50, 50', as depicted on figure 4, configured to cooperate with the hole 29 of the first bearing part 23 of the blade 19 of each of the first detection device 15 and the second detection device 15'. The positioning studs 50, 50' are thus configured to maintain the position of the first detection device 15, and the second detection device 15' relatively to the fixed part 7 and the activation part 9.

The first detection device 15 and the second detection device 15' are therefore sandwiched between the fixed part 7 and the activation part 9. The activation part 9 may be secured to the fixed part around both the first detection device 15 and the second detection device 15'. For example; the activation part 9 may be laser welded to the fixed part 7.

When the user activate the activation part 9, i.e. applies a force F on the activation part 9, the first bearing surface 123 of the activation part 9 transmits the force to the blade 19 via the first bearing part 23.

On one hand, the force is transmitted to the second bearing part 25 via the portion of the blade 19 where the first sensor 21 is arranged. The movement of the blade 19 in the direction of the force F is then hindered by the second bearing surface 125 of the fixed part 7, which is facing in a direction opposite to the direction of the force F. Therefore, the blade 19 is configured to deform at the portion of the blade 19 where the first sensor 21 is arranged.

On the other hand, the force is transmitted to the third bearing part 25' via the portion of the blade 19 where the second sensor 21' is arranged. The movement of the blade 19 in the direction of the force F is then hindered by the third bearing surface 125' of the fixed part 7, which is facing in the direction opposite to the direction of the force F. Therefore, the blade 19 is configured to deform at the portion of the blade 19 where the second sensor 21' is arranged.

The controller 17 is then configured to collect the deformation signal transmitted by the first sensor 21 and the second sensor 21' and to activate the at least one function of the handle 3 when the deformation signal corresponds to predetermined criteria.

The predetermined criteria may correspond to a predetermined range of the numeral values of the signal and/or a predetermined range of the duration of a modification of the signal and/or a predetermined range of the speed of a modification of the signal.

The modification of the signal is to be understood as a rise or a decrease of the value of the signal relatively to a rest value of the signal, the rest value corresponding to the absence of deformation of the blade.

The limit values of the range of the signal value and/or the limit values of the duration range of a modification of the signal and/or the limit values of the speed range of a modification of the signal may be chosen in accordance with the aging of the detection device 15 and/or the outside temperature.

These predetermined criteria are chosen such that the function of the apparatus is not activated by modifications of the signal that may be due to the aging of the detection device 15 and/or a variation of the outside temperature.

The blade 19 may also be secured to the activation part 9 at the first bearing surface 123. In this case, the first hole 29 may be threaded and be attached to the first bearing surface 123 via a screw for example. The blade 19 may also be secured to the activation part 9 at the first bearing surface 123 by any other suitable means known from the skilled person.

The blade 19 may also be secured to the fixed part 7 at the second bearing surface 125. In this case, the second hole 33 may be threaded and be attached to the second bearing surface 125 via a screw for example. The blade 19 may also be secured to the fixed part 7 at the second bearing surface 125 by any other suitable means known from the skilled person.

The blade 19 may also be secured to the fixed part 7 at the third bearing surface 125'. In this case, the third hole 33' may be threaded and be attached to the third bearing surface 125', via a screw for example. The blade 19 may also be secured to the fixed part 7 at the third bearing surface 125' by any other suitable means known from the skilled person.

In this embodiment, the first bearing part 23 bears against the activation part 9 and the second bearing part 25 and the third bearing part 25' bears against the fixed part 7. In another embodiment, the first bearing part 23 may bear against the fixed part 7 and the second bearing part 25 and the third bearing part 25' may bear against the activation part 9.

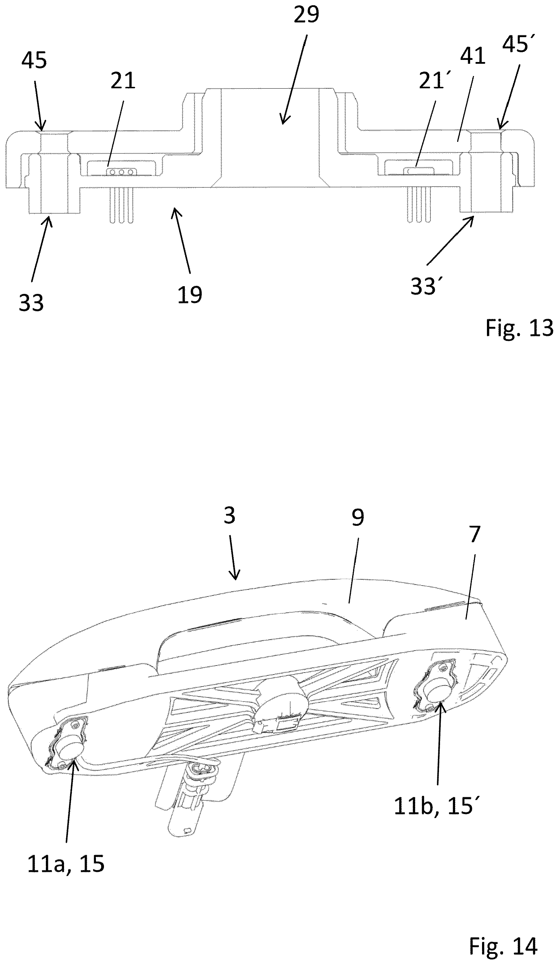

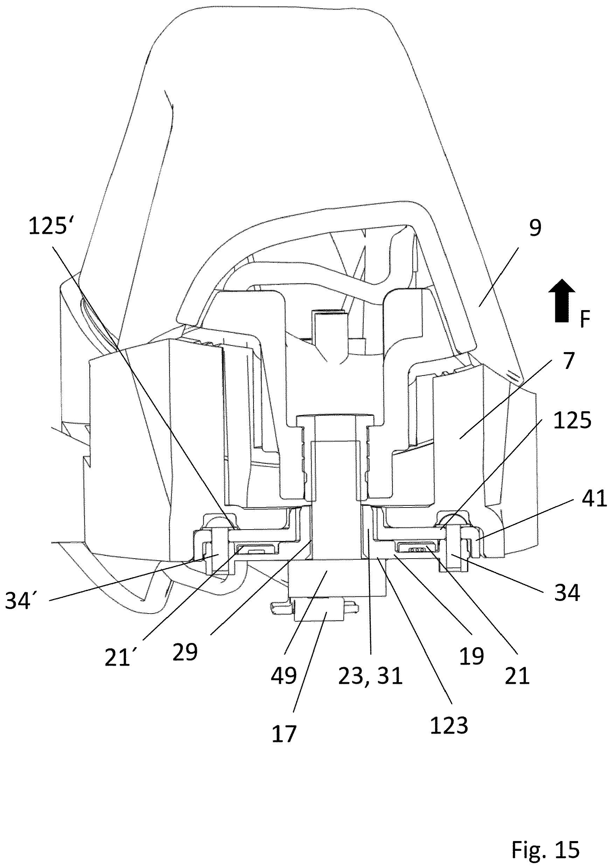

Another embodiment is represented in figures 14 and 15. This embodiment differs from the previous embodiment in that the apparatus is a handle 3 of a vehicle's door wherein the activation part 9 is a gripping part, protruding from the outer wall of the door 5.

This embodiment differs from the previous embodiment in that the activation part 9 is mounted on the fixed part 7 at two mounting areas 11 a, 11b. The detection system 13 comprises the first detection device 15, arranged at the first mounting area 11a and the second detection device 15' arranged at the second mounting area 11b.

The detection system 13 comprises one controller 17 for both the detection devices 15, 15'. In another embodiment, the detection system 15 may comprise a first controller configured to communicate with the first detection device 15 and a second controller configured to communicate with the second detection device 15'.

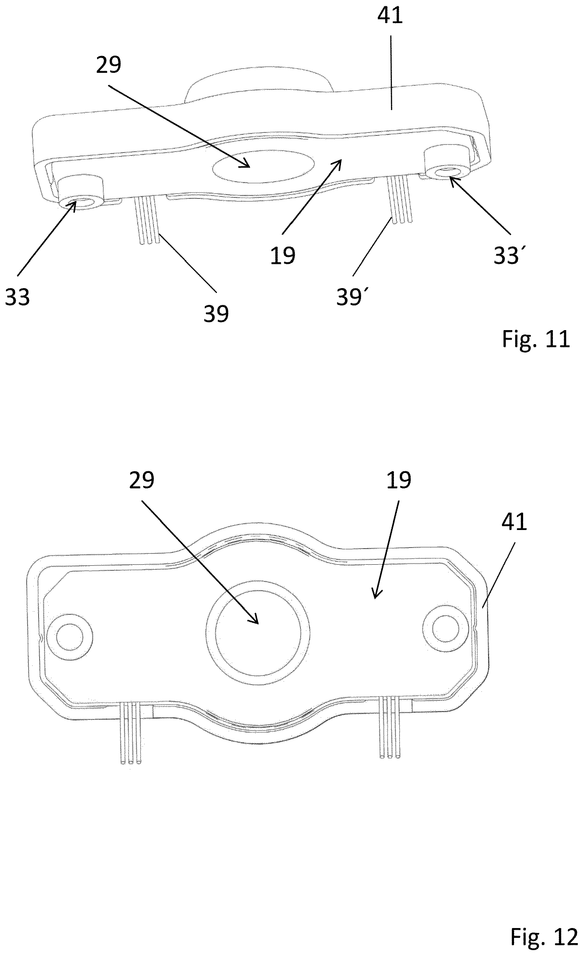

This embodiment differs from the first embodiment in that an attachment element 49 of the activation part 9 is arranged through the first hole 29. The attachment element 49 comprises the first bearing surface 123. In the embodiment depicted on figures 12 and 13, the attachment element 49 is a screw configured to cooperate with a threaded portion of the first hole 29.

In this embodiment, the blade 19 is also secured to the fixed part at the second bearing part 25 and the third bearing part 25' by the means of the screws 34, 34'. The blade 19 may also be secured to the fixed part at the second bearing part 25 and the third bearing part 25' by any other suitable means known by the skilled person.

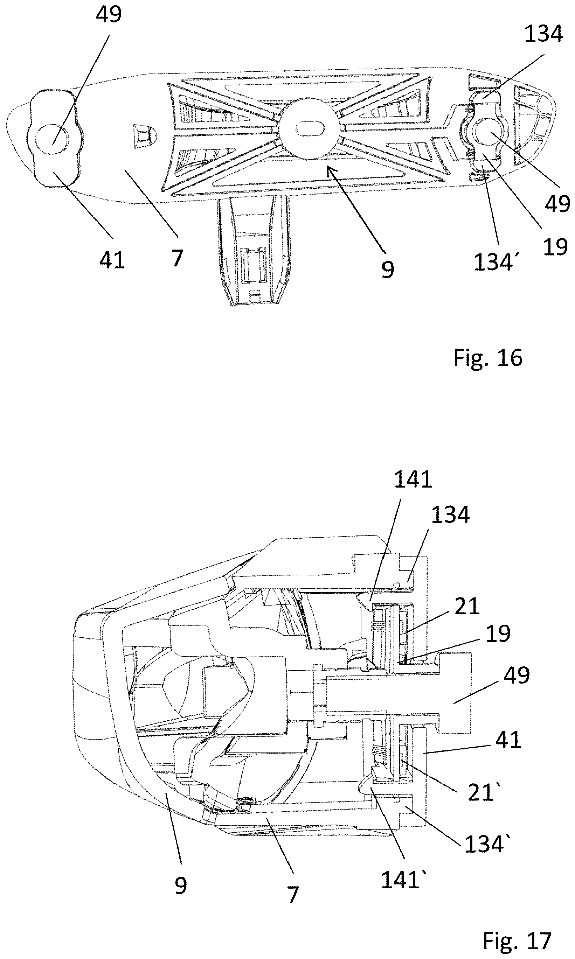

Another embodiment is represented in figures 16 to 18. This embodiment differs from the previously described embodiments in that the second bearing part 25 and the third bearing part 25' are secured to the fixed part 7 via overmolded securing portions 134, 134'. In another example, the first bearing part 23 may be secured to the activation part via an overmolded securing portion.

The overmolded securing portions 134, 134' are formed with the fixed part 7. The overmolded securing portions 134, 134' may protrude from an external envelope of the fixed part 7.

The first sensor 21 and second sensor 21' may be positioned on one or the other face of the blade 19.

At the left side of figure 16 and in figure 17, the first sensor 21 and the second sensor 21' are positioned in a face of the blade 19 facing the outside of the fixed part 7.

The housing 41 is therefore arranged over the blade 19 to protect the first sensor 21 and the second sensor 21'. Both the overmolded securing portions 134, 134' may comprise a hole, and the blade 19 may also comprise a hole at the second bearing part 25 and a hole at the third bearing part 25'. For example, the hole of one overmolded securing portion 134 and the hole of the blade 19 at the second bearing part 25 are superposed. For example, the hole of the other overmolded securing portion 134' and the hole of the blade 19 at the third bearing part 25' are superposed. The housing 41 may comprise fixation organs 141, 141', for example hooks, configured to cooperate with the holes in order to secure the housing 41 over the blade 19.

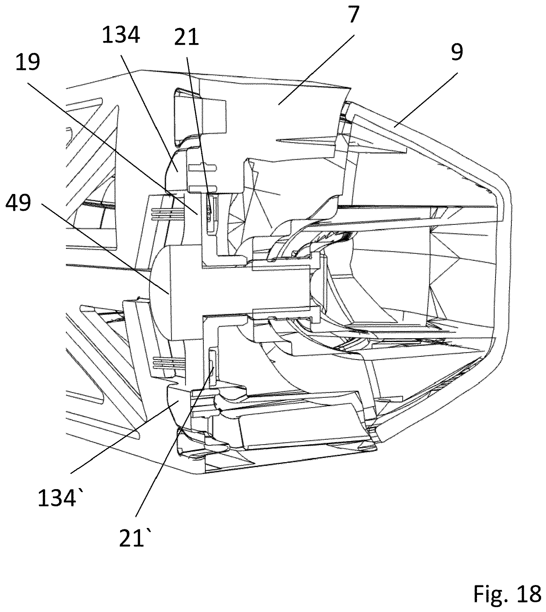

At the right side of figure 16 and in figure 18, the first sensor 21 and the second sensor 21' are positioned in a face of the blade 19 facing the inside of the fixed part 7.

For example, the first sensor 21 and the second sensor 21' may be facing an internal cavity of the fixed part 7.

In this case, the housing 41 may not be needed.

It is to be understood that the present disclosure is not limited to the embodiments described above and illustrated in the drawings; rather, the skilled person will recognize that many changes and modifications may be made within the scope of the appended claims.

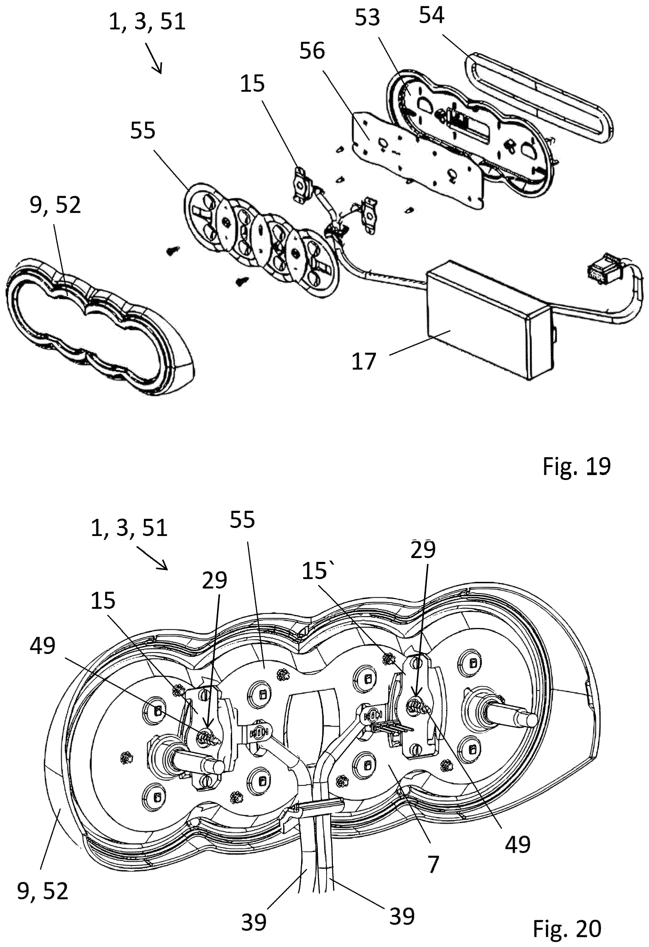

Another embodiment is represented in figures 19 and 20. This embodiment differs from the previously described embodiments in that the door 5 is a trunk lid and the handle 3 is a decorative emblem 51.

At least one detection device 15 may be attached to the emblem 51. Preferably, two detection devices 15 are attached to the emblem 51. The emblem 51 comprises at least a logo 52 and a logo rear housing 53. In addition, the emblem 51 may comprise a seal 54, a light emitter 55 and a circuit board 56 with lights. Thus, the emblem 51 may be illuminated.

The detection device 15 with the sensor 21 can be attached behind the logo 52, for example to the light emitter 55 or the logo rear housing 53.

The first bearing part 23 is configured to bear against the activation part 9, in this case the logo 52, and the second bearing part 25, 25' configured to bear against the fixed part 7, which may be the light emitter 55, the logo rear housing 53, the printed circuit board 56 or the trunk lid.

Thanks to the detection device 15, the entire logo 52 responds to a pressure. This means that a user can push the logo 52 anywhere and get the opening function of the trunk lid.

Furthermore, the emblem 51 may be designed to be waterproof, so that the sensors 21 in the closed emblem 51, inside the emblem 51, are protected from environmental influences.

## Claims

1. Detection device (15, 15') for activating at least one function of an apparatus, for example for activating an electric lock of a vehicle's door (5), upon the detection of a force applied to an activation part (9) of the apparatus, the apparatus further comprising a fixed part (7), the activation part (9) being fixedly attached to the fixed part (7), the detection device (15, 15') comprising:
- a blade (19) comprising a first bearing part (23) configured to bear against the activation part (9) and a second bearing part (25, 25') configured to bear against the fixed part (7),
- at least one sensor (21, 21') arranged on the blade (19) between the first bearing part (23) and the second bearing part (25), and configured to measure a deformation of the blade (19) when a force is applied on the activation part (9) and collect deformation signal to be transmitted to a controller.

2. Detection device (15, 15') according to claim 1, wherein the first bearing part (23) is secured to the activation part (9) and/or the second bearing part (25) is secured to the fixed part (7).

3. Detection device according to claim 2, wherein the first bearing part (23) is secured to the activation part (9) by at least one overmolded securing portion or the second bearing part (25) is secured to the fixed part (7) by overmolded securing portion.

4. Detection device (15, 15') according to claim 1 wherein the blade (19) is made of metal material.

5. Detection device (15, 15') according to claim 1 or 2 wherein the sensor (21, 21') is sticked on the blade (19).

6. Detection device (15, 15') according to any one of the preceding claims, wherein the sensor (21, 21') is a strain gage sensor.

7. Detection device (15, 15') according to claim 4, wherein the sensor (21, 21') is a full bridge strain gage.

8. Detection device (15, 15') according to claim 4, wherein the sensor (21, 21') is a half bridge strain gage.

9. Detection device (15, 15') according to any of the preceding claims, comprising a housing (41) configured to limit the deformation of the blade (19) to a predetermined maximal value.

10. Detection device (15, 15') according to any one of the preceding claims, wherein the first bearing part (23) comprises a protruding portion (31) configured to transmit the force applied on the activation part (9) to the portion of the blade (19) where the sensor (21, 21') is arranged.

11. Detection device (15, 15') according to any one of the preceding claims, wherein the blade (19) comprises a third bearing part (25') configured to bear against the fixed part (7), and a second sensor (21') being arranged between the first bearing part (23) and the third bearing part (25'), the sensor (21) being arranged between the first bearing part (23) and the second bearing part (25) being called the first sensor (21).

12. Detection system (13) for activating at least one function of an apparatus, for example for activating an electric lock of a vehicle's door (5), upon the detection of a force applied on an activation part (9) of the apparatus, the apparatus further comprising a fixed part (7), the activation part (9) being fixedly attached to the fixed part (7), the detection system (13) comprising :
- at least one detection device (15, 15') according to any one of the preceding claims;
- a controller (17) configured to receive the deformation signal transmitted by the at least one sensor (21, 21') of the at least one detection device (15, 15') and to activate at least one function of an apparatus when the deformation signal correspond to predetermined criteria.

13. Apparatus, for example a handle (3) of a vehicle's door (5), comprising:
- a fixed part (7),
- an activation part (9) being fixedly attached to the fixed part (7),
- at least one detection system (13) according to claim 11.

14. Apparatus according to claim 11, wherein the activation part (9) is fixedly attached to the fixed part (7) in a first mounting area (11a) and in a second mounting area (11b), a first detection device (15) being arranged at the first mounting area (11a) and a second detection device (15') being arranged at the second mounting area (11b).
